# DEMANDE DE BREVET EUROPEEN

(11) **EP 4 654 361 A1**
(43) Date de publication de la demande: **26.11.2025**
(21) Numéro de dépôt: 25160798.2
(22) Date de dépôt: 28.02.2025
(51) Int. Cl.: H01M 50/308, H01M 50/342, H01M 50/358, H01M 50/30, F16K 17/16

(54) **DISPOSITIF DE VENTILATION AVEC ECRAN PROTECTEUR POUR BOÎTIER DE BATTERIE(S), ET PROCEDE D ASSEMBLAGE**

(30) Priorité: 26.03.2024 FR 2403048
(71) Demandeur: Purflux Filtration, 78280 Guyancourt (FR)
(72) Inventeur: BONNE, Samuel, 14350 SOULEUVRE EN BOCAGE (FR)
(74) Mandataire: Plasseraud IP

(57) **Abrégé**

Le dispositif (1) de ventilation pour boîtier de batterie inclut un corps (2) de montage formant ou associé à une bordure d'ouverture du boîtier, un canal (C2) dans le corps, une membrane (5) perméable aux gaz et portée par ce corps en obturant le canal, et un couvercle solidarisé à un support périphérique du corps. Le canal, entouré par ce support, guide un échappement gazeux provenant de l'intérieur du boîtier. Le couvercle (3) peut présenter, en regard du canal, un organe perceur (6) pour perforer ou éclater la membrane en cas de surpression dans le canal. Des orifices (O3), prévus par exemple dans le couvercle, permettent un échappement d'urgence accéléré de gaz provenant du canal lorsque la membrane est perforée ou éclatée. Un écran (8) à couche métallique, solidaire d'une partie (9) plastique du couvercle, forme une zone de bouclier thermique (ZP8) en décalage du ou des orifices (O3).

## Description

### Domaine technique

La présente divulgation relève du domaine des systèmes de batterie, notamment des équipements de ventilation permettant une compensation de pression pour batterie. L'invention concerne plus particulièrement un dispositif, se montant sur le boîtier d'une batterie/alimentation électrique, qui inclut au moins une membrane perméable de compensation de pression et un couvercle plastique ajouré protéF8gé par un écran métallique et un procédé d'assemblage d'un tel dispositif.

### Arrière-plan technologique

On connaît, par le document US 2013/032219 A1, un dispositif de compensation de pression, qui inclut une membrane poreuse pour laisser passer les gaz enfermés dans un module électrochimique. La membrane protège l'intérieur du module en empêchant la pénétration de poussières ou d'eau. En cas d'instabilité (pression interne trop élevée), la membrane se soulève à un tel niveau que le couvercle du dispositif de compensation perce la membrane, ce qui permet au gaz de sortir avec un débit plus significatif. Pour cela, le couvercle qui recouvre la membrane présente de nombreuses ouvertures pour l'échappement d'air à un débit significatif, par exemple en définissant une section globale de passage du même ordre de grandeur que, et même éventuellement supérieure à, la section de passage du canal de circulation obturé par la membrane.

De tels dispositifs sont conçus en matériaux plastiques, par exemple des matériaux plastiques très peu ou non susceptibles de produire des flammes ou fumées lorsqu'ils fondent. Certains assemblages prévoient une éjection du couvercle, comme par exemple dans le brevet FR 3126065 B1 en situation d'urgence afin d'augmenter la section disponible pour le flux gazeux sortant. Dans ce cas, les problèmes suivants sont rencontrés :
- si l'éjection ne se produit pas ou est limitée du fait d'un encombrement du côté du couvercle (par exemple une partie déformée par un impact empêche l'écartement du couvercle), le gaz s'accumule ; il y a un effet bouchon, s'agissant d'un couvercle n'ayant pas d'ouverture d'échappement massif, et le risque d'explosion devient important.
- à l'inverse si l'éjection se produit correctement, la probabilité de diffusion de particules incandescentes et de flammes associées devient élevée, avec un grand risque de propagation rapide d'incendie (contact avec le châssis du véhicule).

D'autres assemblages, par exemple utilisant un emboîtement à clips, ne permettent pas une éjection du couvercle. Dans ce cas, il a été constaté que les températures peuvent atteindre des valeurs élevées, dépassant largement 500°C, par exemple vers 900 ou 1000°C. A ce niveau de chaleur, même les plastiques agréés pour les dispositifs de ventilation des boîtiers de batteries fondent rapidement, ce qui peut créer des décollements ou désagrégation des parties qui vont boucher tout ou partie du canal de dégazage (bouchage très rapide et conséquent lorsqu'une grille est prévue sous le couvercle). Le gaz s'accumule ; il y a un effet bouchon, et le risque d'explosion devient important.

Il existe donc un besoin pour des dispositifs de conception simple, durables et utilisables efficacement pour la compensation de pression des batteries.

### Résumé

La présente divulgation vient améliorer la situation.

A cet effet, il est proposé un dispositif de ventilation pour boîtier de batterie, en particulier pour boîtier comprenant une ou plusieurs batteries, le dispositif comprenant :
- un corps, par exemple formant un connecteur;
- un canal, délimité par un élément de conduite et/ou une partie du corps, pour guider un écoulement gazeux s'échappant du boîtier une ouverture (ouverture de boîtier où se raccorde le corps) ;
- une membrane perméable aux gaz, portée (directement ou indirectement) par le corps en obturant le canal, la membrane pouvant constituer une partie de filtration apte à retenir des poussières et/ou de l'eau;
- un couvercle, comprenant une partie de capot plastique ajourée solidarisée à un support de connexion périphérique appartenant au corps , en recouvrant la membrane ;
- un écran à couche métallique qui est distinct de la membrane et inclus dans ou solidaire du couvercle, en formant, dans une zone protectrice prévue dans l'écran, un bouclier thermique interposé entre le canal et une portion d'obturation (du couvercle/appartenant au couvercle) qui est en en regard du canal (il s'agit par exemple d'une portion d'obturation qui appartient à la partie de capot),
- des voies de passage qui permettent de contourner la zone protectrice qui correspond à une zone de chevauchement entre l'écran et la portion d'obturation.

Les voies de passage prévues peuvent être disposées :
- dans le couvercle, dans la partie de capot et en décalage par rapport à la zone protectrice, de sorte que le couvercle est ajouré ;
- et/ou latéralement entre le couvercle et le corps.

Les voies de passage peuvent permettre, lorsque la membrane est perforée ou éclatée, un échappement de gaz provenant du canal qui est un échappement sans passer au travers de la portion d'obturation, pour traverser le couvercle et/ou pour contourner la portion d'obturation du couvercle (le flux étant dévié par la zone protectrice).

Grâce à ces dispositions, une protection thermique efficace peut être avantageusement obtenue pour une région du couvercle fortement soumise à la chaleur et ayant un effet barrière vis-à-vis de particules incandescentes susceptibles - en cas de défaut dans cette région de recouvrement du canal, d'être propulsées directement de l'intérieur du boîtier vers l'extérieur.

La membrane, typiquement prévue dans un évent de compensation de pression, peut être flexible et en partie fragile pour ne plus obturer le canal dans un état perforé ou éclaté. Cet état de la membrane peut être obtenu en cas de surpression dans le canal au-delà d'un seuil de surpression, par exemple du fait d'un gonflement qui provoque un contact de la membrane contre une au moins une pointe ou organe perceur adapté.

Le corps peut être à base d'un matériau rigide, éventuellement en plastique, qui est dépourvu de portion radiale ou obturante, à l'éventuelles exception de fines cloisons. Plus généralement, le corps est pourvu d'une paroi latérale entourant la zone de circulation de gaz et est configuré pour se raccorder, de façon amovible ou permanente, sur le boîtier au niveau de/sur l'ouverture du boîtier. Le corps peut éventuellement être conçu comme une projection annulaire d'un composant de boîtier, ou former un élément de connexion rapporté.

L'écran peut être sous forme de couche, par exemple épousant la face interne du couvercle, éventuellement en complétant une zone périphérique où sont prévues plusieurs des voies de passages. Une zone périphérique de grille peut être prévue dans la partie de capot plastique, tandis que l'écran peut au moins recouvrir une zone centrale pleine (sans ouverture) de cette partie de capot.

De manière générale, on comprend que l'écran peut être décalé (sélectivement décalé) par rapport à un ou plusieurs des orifices formant les voies de passage du couvercle.

Typiquement, l'échappement d'urgence est permis avec une distribution du flux gazeux dans les différentes voies de passage. La partie de capot plastique peut inclure plusieurs orifices de passage (éventuellement parallèles entre eux, notamment s'ils sont sous forme de fentes) non recouverts pas l'écran. L'écran peut être lui-même fendu ou ajouré, de sorte qu'au moins pour partie les orifices ou voies de passages soient entourés par l'écran.

L'échappement de gaz peut se faire sans perte de charge liée au couvercle, par exemple avec une partie de capot présentant une section globale de passage (somme des sections des voies de passage) au moins égale à la section de passage du canal, cette section globale de passage étant accessible/non obturée par l'écran.

On comprend que les gaz très chauds et les flammes éventuelles ne pourront pas dégrader directement le matériau plastique de la partie de capot ainsi protégée et renforcée.

Le canal peut être subdivisé en différents conduits délimités au niveau d'une même ouverture du boîtier, possiblement avec deux ou plusieurs membranes pour répartir les bordures de fixation de ces membranes. Une structure avec deux canaux parallèles couverts chacun par une membrane (une membrane d'obturation par canal) peut être utilisée, sous un même couvercle. Dans ce cas, le dispositif peut prévoir un écran ou une portion formant écran, sur le couvercle, en vis-à-vis de chaque canal.

Le couvercle peut présenter une face interne sur laquelle l'écran est collé, éventuellement avec une zone de collage entourée par plusieurs des voies de passage. Un organe perceur, porté par le couvercle en faisant saillie depuis cette face interne, peut être entouré à sa base par l'écran, ce dernier pouvant optionnellement présenter une ou des ouvertures prédéfinies, délimitées par exemple chacune par une bordure annulaire.

Dans des réalisations, l'écran est plat, éventuellement plan, au moins dans une zone centrale en chevauchement avec une portion d'obturation centrale, sans voie de passage, de la portion d'obturation (au sein de la partie de capot) en matériau plastique. L'écran peut être sensiblement plat et d'épaisseur inférieure ou égale à une épaisseur du couvercle.

Une pièce plastique peut former la partie de capot (et ainsi la portion d'obturation) du couvercle et, plus généralement, une fonction de protection de la membrane peut être assurée par le couvercle qui est par exemple un couvercle à jupe, emboîté sur une partie périphérique (typiquement annulaire) du corps.

Le corps peut :
- s'insérer partiellement dans un volume intérieur du couvercle délimité par la jupe,
- délimiter une zone de circulation gazeuse, en aval du canal (et éventuellement en aval d'au moins un autre canal dans certains options), correspondant à une zone de débouché du ou des canaux (cette zone de circulation s'étend entre l'écran porté par le couvercle et la ou les membranes associées aux canaux).
- retenir axialement le couvercle, par exemple par des reliefs ou ergots formés sur une face externe du corps (corps annulaire), et/ou par des pattes formant des bords de prise ou des gorges pour l'engagement de reliefs appartenant à/portés par la jupe du couvercle, dans une configuration de protection de chaque membrane.

Dans des réalisations du dispositif, la partie de capot peut présenter une ou plusieurs des particularités suivantes :
- la partie de capot est moulée en une seule pièce de matière plastique, de préférence sans partie élastiquement déformable/flexible dans la partie d'obturation ;
- en regard du canal, un organe perceur est porté par le couvercle, de préférence par la partie de capot plastique, pour perforer ou éclater la membrane en cas de surpression dans le canal (au-delà d'un seuil de surpression).
- les voies de passage comprennent, dans le couvercle, des voies de passage distribuées à la fois autour de l'écran et autour de l'organe perceur, une partie au moins de ces voies de passage pouvant optionnellement être formées dans une jupe de la partie de capot.
- l'écran présente des ouvertures dans une partie périphérique en chevauchement avec une jupe de la partie de capot.
- tout ou partie de l'écran consiste en une structure métallique rigide avec une partie centrale métallique et au moins un flanc replié ou une jupe intérieure métallique, recouverte latéralement par une jupe de la partie de capot.
- l'écran, au moins dans une zone de protection en chevauchement avec la portion d'obturation, est imperméable aux liquides et/ou pourvu de pores de taille submillimétrique.
- l'écran est souple/pliable (le matériau ou la structure constitutive de l'écran étant souple/pliable).
- la partie de capot présente des ouvertures étroites, de préférence allongées, ayant une première largeur et faisant partie d'un premier groupe d'ouvertures périphériques.
- l'écran présente des ouvertures étroites, de préférence allongées, ayant une première largeur (possiblement identique à celle prévu pour les ouvertures étroites de la partie de capot) et faisant partie d'un premier ensemble d'ouvertures d'écran.
- une jupe intérieure ou des flancs de l'écran est/sont pourvus des ouvertures étroites qui sont en chevauchement (par l'intérieur) de tout ou partie des ouvertures étroites de la partie de capot.
- la partie de capot présente une ou plusieurs ouvertures larges, circulaires, ovales ou à bordure arrondie, ayant de préférence un diamètre au moins cinq fois supérieur à la première largeur de n'importe laquelle des ouvertures étroites de la partie de capot, et faisant optionnellement partie d'un deuxième groupe d'ouvertures périphériques.
- la ou les ouvertures du deuxième groupe d'ouvertures périphériques (de la partie de capot) sont disposées dans des coins de la portion d'obturation ou entre la portion d'obturation (qui est typiquement une portion centrale de la partie de capot) et les ouvertures étroites de cette partie de capot,
- l'écran présente des ouvertures larges, circulaires, ovales ou à bordure arrondie, ayant de préférence un diamètre au moins cinq fois supérieur à la première largeur de n'importe laquelle des ouvertures étroites, et faisant partie d'un deuxième ensemble d'ouvertures périphériques.
- les ouvertures de la partie de capot et/ou les ouvertures étroites de l'écran sont prévues sur une jupe et sont allongées suivant une direction parallèle à un axe longitudinal de l'organe perceur, qui peut être une direction perpendiculaire à la portion (radiale) d'obturation.

Dans des réalisations, l'écran avec la couche métallique qui peut définir la face inférieure peut être maintenu dans la zone d'échappement de gaz en regard d'un débouché du canal (formé typiquement par le bord annulaire du corps/flasque) pour former la zone d'impact des particules de combustible et plus généralement des particules solides les plus grosses (particules qui peuvent être incandescentes) rejetées depuis l'intérieur du boîtier et susceptibles de faire brûler des parties d'un véhicule si elles devaient dégrader rapidement le couvercle et le traverser pour ensuite générer des flammes. L'écran forme une partie stable et de renforcement du couvercle qui permet de grandement perturber/retarder, voire stopper l'enchaînement dramatique d'un emballement thermique puis du feu qui se propage, ce qui est constaté dans des cas avec éjection ou fusion du couvercle sans plus aucune protection.

Selon une particularité, le couvercle est une partie préassemblée qui intègre l'écran avant une fixation de cette partie (préassemblée) sur le support de connexion. Ainsi, le couvercle peut être une partie préassemblée avec par exemple un sous-couvercle intérieur ou une couche intérieure permettant à la couche métallique de protéger la portion d'obturation/partie de capot. Dans un état préassemblé, le couvercle (partie préassemblée au préalable) se fixe sur le support de connexion.

Le support de connexion peut intégrer une plaque ajourée de protection rigide métallique, ou grille métallique (par exemple en acier inoxydable). La membrane peut être solidarisée au support de connexion, typiquement par le dessus correspondant à un côté opposé à la plaque ou grille de protection. La membrane peut être maintenue espacée de la plaque ou grille de protection par des cloisons prévues dans le canal.

Typiquement, le support de connexion correspond à une première partie préassemblée, incluant le corps, la membrane et éventuellement la plaque ajourée ou grille (métallique) sous-jacente au corps, tandis que le couvercle correspond à une deuxième partie préassemblée. La deuxième partie se monte sur la première partie et reste attachée à cette première partie, la fixation étant permanente ou résultant d'un encliquetage résistant aux variations de pression dans le canal, sous la membrane.

La membrane peut éclater sous l'effet de l'accumulation de pression dans le canal, ce qui n'est pas le cas du boîtier et du support de connexion (avec le corps) monté sur le boîtier, sachant que le flux gazeux peut s'échapper massivement (à très haut débit par exemple) du boîtier via le canal. Le couvercle peut rester en place en offrant une section globale de passage importante, les voies de passage pouvant inclure des orifices axiaux de passage décalés par rapport au canal et en chevauchement (en regard) d'une zone ou région périphérique annulaire de fixation.

Une région périphérique annulaire de fixation peut, optionnellement, être formée dans le support de connexion en s'étendant autour d'un axe central du corps. Cette région de fixation s'étend autour du canal et est par exemple radialement interposée entre un joint annulaire réalisant l'étanchéité contre le boîtier et une paroi de délimitation du canal qui peut être formée intérieurement dans le corps.

Dans des options de réalisation, le corps présente une paroi de base ou flasque de montage et comporte une paroi annulaire de délimitation du canal, qui est une paroi s'étendant longitudinalement, depuis une face inférieure de la base ou flasque de montage, jusqu'à un bord supérieur où peut se poser (et typiquement se fixer) la membrane.

Le corps et/ou une plaque de protection rigide métallique peut/peuvent constituer une partie de connexion qui porte un élément d'étanchéité annulaire, de préférence logé dans une gorge intérieure de la paroi de base ou flasque. La gorge intérieure peut déboucher axialement à l'opposé d'une portion d'obturation du couvercle (portion d'obturation prévue dans la partie de capot), afin de réaliser une étanchéité annulaire avec le boîtier.

Le corps, par exemple pourvu de cloisons séparatrices, peut être optionnellement réalisé d'une seule pièce. Le corps présente une face supérieure/distale du joint, qui peut être un joint de contact avec le boîtier. La face supérieure présente une région de surface annulaire, sensiblement plane, sur laquelle la membrane est fixée ou contre laquelle une bordure de cette membrane est pincée.

La paroi latérale annulaire du corps, servant à former la circonférence du canal, peut s'étendre longitudinalement autour d'un axe central entre le flasque qui permet un ancrage sur le boîtier, en disposant typiquement d'une surface inférieure sensiblement plane et perpendiculaire à l'axe central, et un bord annulaire axialement distal de l'ouverture du boîtier. Le bord annulaire peut être formé dans une projection axiale qui fait saillie depuis un épaulement annulaire extérieur du flasque. Le flasque est constitué par exemple d'une pièce plastique rigide constitutive du corps, en pouvant s'interposer axialement entre une plaque ou grille de protection, métallique, disposée le long de la surface inférieure du flasque, et la membrane qui est posée sur le bord annulaire.

Dans des réalisations permettant à l'écran d'être solidarisé au couvercle/faire partie du couvercle, une ou plusieurs des particularités suivantes sont prévues :
- l'organe perceur est configuré pour traverser l'écran ou être disposé entre deux portions adjacentes de l'écran et/ou cet organe perceur s'étend suivant une direction axiale définie par une tige de l'organe perceur, de telle sorte qu'un axe longitudinal de la tige passe à l'intérieur d'un périmètre délimité par un bord externe de l'écran.
- l'organe perceur peut faire partie d'un groupe d'organes perceurs portés par la partie de capot.
- un ou plusieurs organes perceurs peuvent être inclus dans la pièce plastique constitutive de la partie de capot.
- la partie de capot permet la fixation sur une périphérie du corps, par exemple en disposant de moyens de fixation sur une jupe de la partie de capot, en permettant en outre de supporter l'écran pour le suspendre et le maintenir écarté de la membrane lorsque cette dernière est au repos (par exemple en configuration plane et typiquement fixée sur le corps par un bord de membrane).
- la membrane et une face intérieure, en regard du canal, de l'écran sont agencées parallèlement l'une à l'autre, avec un espacement.
- l'espacement entre la membrane et la face intérieure de l'écran correspond à une sous-zone d'un volume intérieur du couvercle, par exemple délimité par une jupe de la partie de capot.

Avec ces dispositions, il est permis de réaliser un agencement compact, au niveau d'une ouverture de boîtier, avec une membrane protégée des salissures par un couvercle pour une gestion du mode de ventilation habituel, tout en disposant d'une sécurité dans un mode d'urgence avec échappement gazeux massif, en s'assurant de percer la membrane et d'éviter de faire fondre des parties plastiques dont le couvercle est constitué, ce qui prévient ou retarde la création de flammes.

La dimension axiale de l'organe perceur peut être prévue pour définir une extension axiale en saillie, depuis la couche métallique, de sorte que cette extension est supérieure à une épaisseur maximale de la couche métallique. Une telle extension axiale en saillie peut être largement supérieure à une épaisseur moyenne de la couche métallique, par exemple lorsque cette épaisseur est sensiblement constante. Par exemple, elle dépasse le double ou le triple de l'épaisseur maximale (ou éventuellement de l'épaisseur moyenne) de la couche métallique. Autrement dit, l'organe perceur peut dépasser du reste du couvercle dans la zone formant l'espacement entre la face intérieure (protectrice pour l'impact de particules incandescentes/combustibles issues du canal) de l'écran et la face externe de la membrane opposée au canal.

L'écran peut être accolé à la partie de capot pour optimiser la compacité du couvercle du dispositif. L'écran peut présenter des échancrures permettant d'éviter de recouvrir par l'intérieur des ouvertures de la partie de capot. Dans des options, l'écran comprend une couche adhésive directement collée sur la partie de capot. La couche adhésive peut être intercalée au moins entre la portion d'obturation formée dans cette partie de capot et la couche métallique.

Dans des options de réalisation de la structure constitutive de l'écran, que la structure soit multicouche ou non, l'écran peut :
- être séparé (sans contact au moins dans la zone où il se superpose au canal) et espacé du corps.
- être porté par la partie de capot en formant une face intérieure du couvercle.
- présenter deux faces parallèles opposées dont l'une est constituée par la couche métallique, et l'autre forme une couche de contact pour le contact avec un matériau plastique constitutif d'une pièce rigide structurelle du couvercle (partie de capot).
- être rendu solidaire du couvercle par des moyens de fixation et/ou de collage.

Plus largement, les moyens de fixation pour le maintien en position de l'écran peuvent être résistants à la chaleur, par exemple en incluant du métal qui fait partie d'une structure se fixant au boîtier et/ou en étant des moyens de fixation disposés au-delà de l'écran ou disposés à l'opposé du canal et ainsi en arrière de la couche métallique. Une matière adhésive ou colle peut former la couche de contact.

Selon une particularité, l'écran comprend une portion sensiblement plane parallèle à un plan de l'ouverture. La portion plane peut être délimitée par des bords en ayant un périmètre. La portion plane est plus longue qu'un diamètre ou plus grande dimension d'un débouché formé par le canal, et/ou le périmètre de la portion plane est supérieure à la circonférence/périmètre intérieur du canal (définissant la section de sortie du canal, qui est typiquement la section de sortie où s'étend la membrane au repos).

L'écran peut être traversé par une tige de l'organe perceur dans la portion sensiblement plane. Alternativement ou en complément, l'écran peut inclure une saillie ou pointe, orientée vers la membrane pour former un moyen de perçage, le cas échéant en formant l'organe perceur.

Dans certaines réalisations, l'écran est agencé avec :
- une épaisseur d'écran qui est la même ou inférieure (écran plus mince) qu'une épaisseur de la partie de capot qui forme la surface externe du couvercle.
- la couche métallique de l'écran réalisée sous forme d'une partie de film ou feuille qui constitue une surface de l'écran qui est en vis-à-vis du canal.
- la partie de film ou feuille (qui constitue la couche métallique) formant une face de l'écran qui définit une surface directement en vis-à-vis de la membrane.
- la couche métallique flexible , cette couche pouvant épouser la forme de la face interne du couvercle plastique à protéger.
- dans la couche métallique, de l'aluminium, de l'acier (typiquement inoxydable), un alliage incluant l'un et/ou l'autre de ces éléments.
- une couche métallique incluant ou constituée d'une toile métallique ou structure à treillis métalliques (par exemple une toile tissée).
- des fils ou faisceaux de fibres métalliques intégrés dans la couche métallique.
- au moins une couche d'un matériau fibreux thermiquement isolant, par exemple interposée entre une couche métallique et la partie de capot.
- des fibres céramiques

Une couche d'isolation thermique, par exemple en céramique ou en composite céramique (le cas échéant composite à matrice céramique), peut éventuellement être interposée entre la couche métallique (à structure renforcée, typiquement) et une couche formant la surface adhésive. Elle peut aussi être encollée et, avant la fixation sur la partie de capot liée à un support amovible de contact avec la couche adhésive. Ce support, typiquement souple, est retiré en réalisant la fixation sur le couvercle.

Dans des réalisations, l'écran présente une structure tridimensionnelle (structure prédéfinie) et peut disposer d'ouvertures disposées latéralement et axialement, pour distribuer la section de passage pour le flux gazeux. La zone protectrice formée par l'écran, est une zone sans ouverture à l'exception d'orifice(s) pour le passage d'un organe perceur qui rejoint la portion d'obturation en traversant l'écran. L'écran peut délimiter un espace creux entre des flancs qui sont décalés latéralement par rapport à la zone protectrice (sachant que ces flancs ne sont pas en regard et ne recouvrent pas axialement le canal).

Dans des modes de réalisation du dispositif, on prévoit une ou plusieurs des particularités suivantes :
- l'écran présente une ou plusieurs parties pliées ou incurvées pour recouvrir (chacune) une portion de marge de la partie de capot qui est prévue dans une jupe du couvercle ou qui est adjacente à la portion d'obturation.
- il est prévu un élément métallique longeant la face de base du corps, en étant disposé entre le boîtier et le corps, par exemple en s'étendant suivant un plan qui coupe un joint porté dans une gorge du corps (gorge à débouché axial inférieur par exemple).
- la membrane s'étend entre l'écran et un élément métallique (élément protecteur distinct du corps), par exemple ajouré, qui recouvre l'ouverture du boîtier.
- le corps peut être pourvu de cloisons disposées dans le canal.
- les cloisons permettent de maintenir une configuration plane de la membrane en cas de dépression dans le canal.
- les cloisons ont une première hauteur et sont axialement plus allongées/hautes que l'extension axiale du support de connexion pour le couvercle.
- les cloisons, chacune dimensionnées avec la même première hauteur, sont entourées par le support connexion, annulaire, qui est formé sur un épaulement externe du corps formé à une deuxième hauteur inférieure à la première hauteur (la première hauteur et la deuxième hauteur étant mesurées chacune depuis une face de base du corps.

Le dispositif permet à la fois une compensation de pression d'un boîtier de batterie et une ventilation d'urgence, typiquement en protégeant la membrane poreuse aux gaz pour son fonctionnement de compensation. Une conception préassemblée, sans mobilité du couvercle verrouillé, permet au dispositif de pouvoir obturer efficacement l'ouverture du boîtier et conserver l'intégrité des membranes, dans un environnement soumis à des vibrations. C'est le cas notamment lorsque le boîtier de batterie est monté dans un véhicule motorisé, par exemple une automobile ou autre engin roulant.

Dans des options de réalisation, la membrane (au moins une membrane) est conçue pour garantir l'étanchéité à l'huile, à l'eau et à la poussière. Elle peut être en matériau hydrophobe et/ou former une barrière à l'eau.

Il est permis de réaliser une gestion de la pression avec un dispositif pourvu d'un couvercle qui reste fermé quel que soit le mode de fonctionnement. L'assemblage de la partie de support, avec la membrane (partie complémentaire du couvercle), peut faire intervenir une région de fixation périphérique dans le corps, pour la solidarisation sur le boîtier et pour la fixation du couvercle, qui n'interfère pas avec la zone annulaire de fixation de la membrane, qui se situe par exemple sur une projection ou une zone de bord décalée intérieurement par rapport à la région de fixation.

Dans des options, la ou les membranes peuvent être déposées au niveau d'un épaulement intérieur du corps ou d'une face transversale (en regard du couvercle).

Selon un aspect, il est proposé un procédé d'assemblage d'un dispositif de ventilation qui minimise les risques d'encombrer la zone par laquelle un flux gazeux doit s'échapper en urgence, par la fonte de matériau plastique constitutif de la portion d'obturation dans le couvercle maintenu en place sur l'ouverture correspondante du boîtier de batterie(s).

A cet effet il est proposé un procédé d'assemblage d'un dispositif de ventilation pour boîtier de batterie, en utilisant un écran apte à se monter sous une portion d'obturation d'un couvercle avant une connexion du couvercle sur un corps équipant le boîtier de batterie en délimitant un canal formant une sortie au travers d'une ouverture du boîtier, le procédé comprenant les étapes consistant essentiellement à :
- disposer une membrane transversalement par rapport à un support annulaire ou paroi latérale du corps, la membrane étant perméable aux gaz pour permettre une filtration sélective d'un flux gazeux circulant dans le canal pour quitter le boîtier de batterie;
- fournir le couvercle dans un état préassemblé, avec l'écran inclus dans ou solidaire du couvercle, l'écran comportant une couche métallique et formant un bouclier thermique recouvrant par le dessous la portion d'obturation du couvercle ;
- fixer rigidement le couvercle sur le corps, de sorte que l'écran recouvre le canal et la membrane (membrane qui est flexible et à partie fragile pour ne plus obturer le canal dans un état perforé ou éclaté de la membrane obtenu en cas de surpression dans le canal au-delà d'un seuil de surpression) ;
dans lequel des voies de passage sont prévues dans le couvercle ou en périphérie de la portion d'obturation, de préférence dans une partie de capot en matériau plastique qui inclut la portion d'obturation.

Les voies de passage peuvent permettre un échappement d'urgence de gaz au travers du couvercle et/ou en contournant la portion d'obturation. Typiquement, ces voies de passages peuvent être distribuées dans la partie de capot et décalées par rapport à l'écran ou une zone de protection formée par l'écran, pour rendre le couvercle ajouré.

Dans des modes de réalisation du procédé d'assemblage, une ou plusieurs des dispositions suivantes peuvent être adoptées :
- l'écran est fourni sous forme d'une feuille flexible qui est fixée de manière permanente à une face interne de la partie de capot.
- l'écran inclut une portion ou zone de protection thermique en regard d'un débouché du canal, avec l'un au moins parmi une correspondance de forme et une correspondance dans des dimensions de périmètre/bordure, entre le contour/bordure du débouché et le contour de la zone de protection thermique.
- les orifices du couvercle sont tous décalés latéralement/radialement vers l'extérieur par rapport la zone de protection thermique qui fait partie d'une zone centrale du couvercle imperméable au gaz/à effet barrière aux gaz (la partie de capot pouvant aussi être pleine, sans ouverture, au niveau du chevauchement avec cette zone de protection thermique).

Selon certaines options, la feuille ou partie analogue (de préférence imperméable aux gaz) constitutive de la zone protectrice disposée en regard du canal, est fixée par collage ou soudure sur une face interne de la partie de capot. Avec cet agencement, l'écran est rigidifié et accolé à la portion d'obturation. Additionnellement ou indépendamment de ce type de fixation, l'écran peut être dépourvu d'ouvertures ou fentes, au moins une partie des voies de passage pouvant être sélectivement décalée dans une région périphérique du couvercle par rapport à l'écran. Possiblement, des échancrures peuvent permettre de délimiter des sections de bords sans que l'écran ne soit ajouré.

Dans d'autre options, éventuellement avec l'écran également fourni sous forme d'une feuille flexible, l'écran est pourvu d'ouvertures ou fentes, au moins une partie des voies de passage passant au travers de l'écran. Typiquement, les voies de passage peuvent inclure des orifices de la partie de capot qui sont en alignement ou chevauchement avec les ouvertures ou fentes de l'écran.

La membrane peut être fixée par une étape de soudage réalisée à chaud, par exemple par utilisation d'une énergie vibratoire, optionnellement de façon à faire fondre un ou plusieurs reliefs annulaires formés sur le corps. Une portion annulaire avec de tels reliefs peut ainsi fondue lors de l'étape de soudage. La membrane peut être fixe dans une zone de soudure annulaire et déformable dans la portion obturante (perméable au gaz) entourée par cette zone de soudure.

Selon une particularité, le couvercle présente une jupe ou une portion tubulaire apte à loger intérieurement (donc entourer) une projection ou portion d'insertion qui appartient au corps. Le corps peut par exemple présenter une projection creuse, annulaire ou à paroi latérale annulaire. Un support de montage/connexion peut être formé par le corps, qui est par exemple réalisé une pièce et optionnellement prévu pour recouvrir axialement une grille métallique de protection.

Une fixation du corps sur le boîtier est permise par des organes d'attache (boulons, vis ou autres pièces adaptées pour permettre une connexion rigide), par exemple en disposant tout ou partie des organes d'attache dans une région entourée par un joint de contact avec le boîtier. Lorsque des trous sont prévus dans la partie de capot, l'un au moins/plusieurs des organes d'attache sont disposés à l'aplomb d'un trou correspondant de la partie de capot.

Eventuellement, le dispositif forme une unité de ventilation préassemblée qui ne recouvre pas encore l'ouverture du boîtier de batterie. On obtient ainsi un dispositif formant un composant fonctionnel préassemblé, qui peut se monter par vissage, quart de tour, ou autre opération simple de montage sur la région du boîtier formant l'ouverture (large ouverture par rapport aux ouvertures étroites obturées par les clapets) du boîtier. Une fixation simple de ce type peut permettre d'obtenir l'étanchéité grâce à un joint rapporté sur la base/embase du dispositif, tandis que le couvercle ou partie de protection analogue reste dans sa configuration d'obturation non étanche, pleinement emboîté sur le corps constituant le support de connexion. Le dispositif peut donc être transporté, conditionné et livré de façon robuste, avec un couvercle dont la partie de capot est sans ouverture au moins dans une portion radiale de recouvrement du canal, et permet de limiter le nombre d'étape(s) de mise en place du dispositif sur le boîtier de batterie. Le couvercle peut être échancré ou pourvu d'ouvertures axiales pour la mise en place des organes d'attache pour la connexion au boîtier alors que le couvercle est déjà solidarisé au corps.

### Brève description des dessins

D'autres caractéristiques, détails et avantages apparaîtront à la lecture de la description détaillée ci-après, et à l'analyse des dessins annexés, sur lesquels :
la figure 1 est une vue en perspective éclatée d'une unité de ventilation apte à se monter directement sur une paroi d'un boîtier de batterie, afin d'obturer une ouverture de cette paroi.
la figure 2A illustre, par une perspective, la moitié d'un dispositif de ventilation ayant un montage similaire à celui de l'unité de la figure 1 en utilisant une membrane d'obturation d'un canal de dégazage, à l'aplomb d'un écran métallique porté par un couvercle.
la figure 2B montre un détail d'un écran métallique tel que celui prévu dans la figure 2A, qui peut être sous forme de structure multicouche avec une couche de fixation pour adhérer sur une face interne d'une partie de capot plastique du couvercle.
la figure 3 est une vue de dessus, partielle, d'un écran à couche métallique, similaire ou identique à celui prévu dans l'unité de ventilation de la figure 1.
la figure 4 est une vue en perspective d'un dispositif de ventilation qui peut être éventuellement identique à celui de la figure 2A.
la figure 5 montre un exemple de montage de l'unité de ventilation sur une face externe d'une paroi du boîtier de batterie.
la figure 6A montre, par une vue en perspective de dessus, un exemple de support de connexion pouvant permettre, d'une part la fixation au boîtier de batterie, et la fixation d'un couvercle pour recouvrir la membrane portée par le support de connexion.
la figure 6B montre, par une vue en perspective de dessous, le support de connexion de la figure 6A (sans les vis d'attache), avec une grille de protection placée à l'extrémité opposée à celle portant la membrane.
la figure 6C montre, par une vue de dessous et après éclatement/perçage de la membrane, l'unité de ventilation (sans les vis ou organes d'attache) avec son couvercle qui recouvre toujours le support de connexion de sorte qu'une zone de protection formée par l'écran se situe en regard du canal.
la figure 7 est une vue de dessous, en perspective, d'une partie de capot en matériau plastique dépourvu de métal (ou matière minérale) avec de nombreux orifices permettant l'évacuation de gaz en périphérie d'une zone de protection (typiquement centrale) de l'écran.

### Description des modes de réalisation

Il est exposé ci-après, de façon détaillée, plusieurs exemples de modes de réalisation non limitatifs. Sur les différentes figures, des références identiques indiquent des éléments identiques ou similaires.

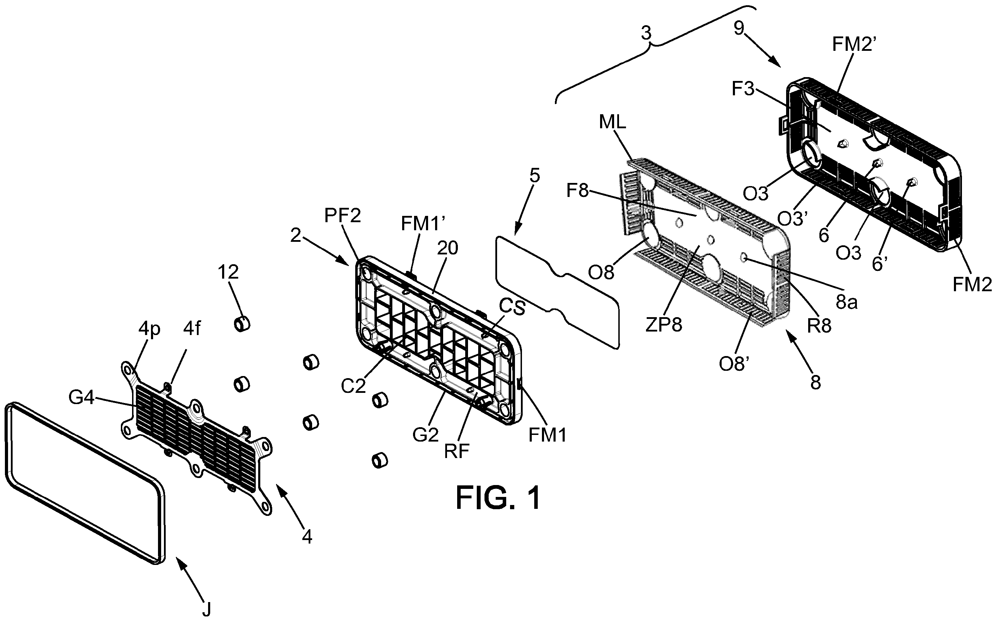

En référence aux figures 1, 2A, 4, 5 et 6C, il est montré une unité de ventilation/compensation de pression pouvant être livrée comme une unité préassemblée, prête à obturer une ouverture O d'un boîtier de batterie en se montant typiquement du côté d'une face externe d'une coque ou plaque du boîtier P. Dans ce qui suit, cette unité (possiblement préassemblée) est appelée dispositif 1 de ventilation. Dans des options préférées, le dispositif 1 présente une partie de support incluant ou consistant en un corps 2 permettant une connexion au boîtier, en étant pourvu de moyens de fixation PF2, par exemple formés comme une bride annulaire ou comme des pattes d'insertion/retenue pour le maintien en position sur le boîtier de batterie. Les moyens de fixation PF2 peuvent être prévus dans une base du corps 2, qui recouvre le boîtier P ou qui est optionnellement insérable (en partie) à l'intérieur du boîtier de batterie. L'élément ou corps 2 peut se composer essentiellement d'un connecteur rigide, en matériau plastique, optionnellement pourvu d'un joint J monté ou rapporté sur ce connecteur. Le corps 2 peut avoir une configuration aplatie, avec une épaisseur (correspondant à une hauteur) qui est par exemple au moins quatre ou cinq fois inférieure à une largeur ou diamètre externe. Le corps peut être prévu d'une seule pièce en matériau plastique, non-renforcé ou renforcé (par exemple par des fibres de verre, fibres de carbone ou similaire) ou matériau moulé similaire.

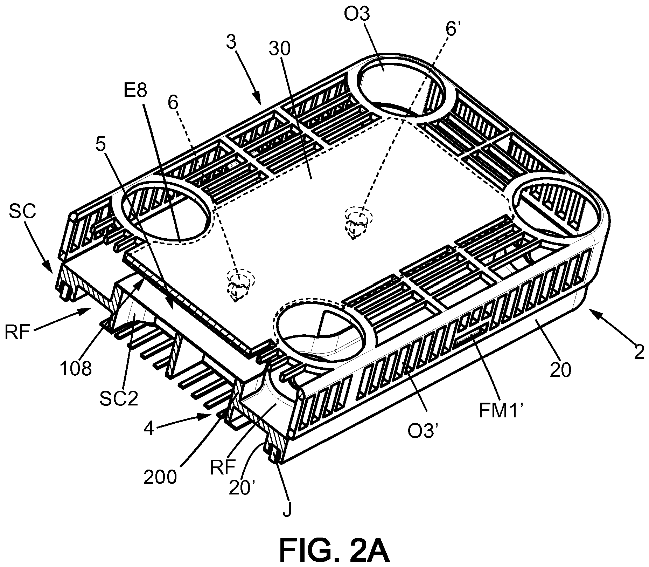

Le corps 2, de structure creuse et ouvert à deux extrémités axiales opposées, est complété par une membrane 5 flexible et poreuse/perméable au gaz, qui permet un effet de compensation de pression. La membrane 5 s'étend transversalement par rapport à un axe longitudinal, typiquement un axe central X du corps 2. La membrane peut se gonfler vers l'extérieur en cas de légère suppression et peut même être percée si la surpression présente un risque, en dépassant un seuil de surpression. Dans des réalisations, comme par exemple dans le cas de la figure 2A, la membrane 5 n'est pas exposée/ visible depuis l'extérieur, grâce à un couvercle 3 du dispositif 1 qui se monte sur le corps, par des clips ou par tout mode de fixation adapté permettant de fixer rigidement le couvercle 3.

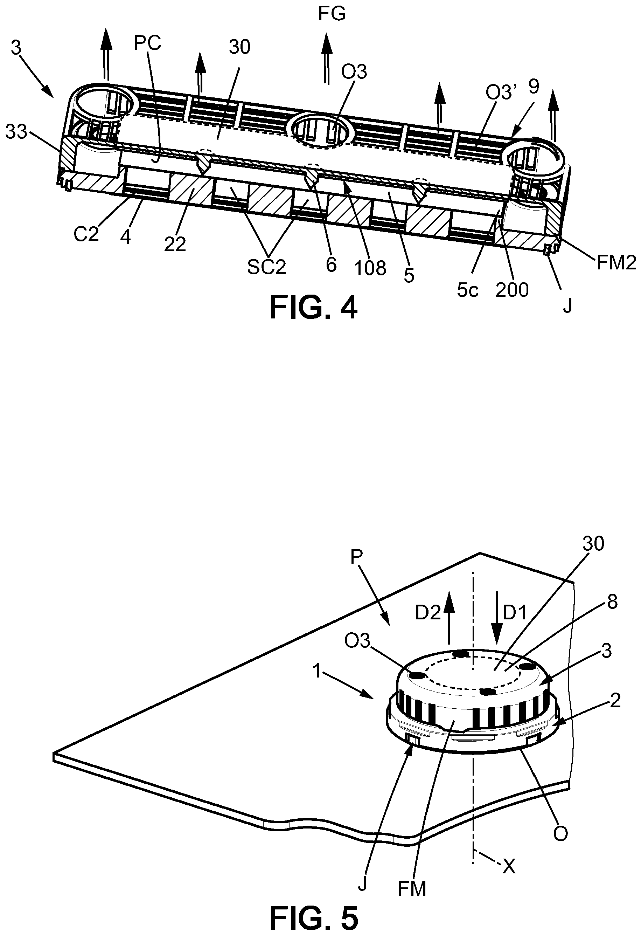

La figure 5 montre un montage de couvercle 3 pour lequel une seule membrane 5 et un seul écran 8 (formé par exemple d'un bloc) sont en vis-à-vis pour un effet de déviation de flux, périphérique par rapport à la portion d'obturation 30, ce qui est compatible avec :
- une ventilation en mode normal, dans les deux sens D1 (entrant) et sortant (D2) suivant la direction de l'axe central X, avec l'écran 8 sous-jacent à la portion d'obturation 30,
- et une ventilation d'urgence dans le sens D2, après libération de l'extrémité d'évacuation du corps 2 du fait de la dégradation/éclatement de la membrane 5, qui non seulement bénéficie de l'effet de déviation mais s'avère robuste en permettant l'impact ciblé des particules combustibles sur une zone de protection ZP8 non ajourée (dans la zone de chevauchement entre l'écran 8 et cette portion 30).

Le couvercle 3 présente une portion d'obturation 30, qui peut être visible de l'extérieur, formée dans une pièce en polymère résultant d'un moulage (à base d'un matériau thermoplastique) ou matériau plastique adapté. Pour prévenir le risque de perte de plastique dans un environnement très chaud, notamment en cas d'emballement thermique, le couvercle 3 est intérieurement recouvert d'une couche métallique ML prévue dans un écran 8 qui est disposé entre une des ouvertures du corps 2 et la portion d'obturation 30.

Comme bien visible notamment sur les figures 1 et 4, le corps 2 peut disposer d'une paroi latérale 20, d'une extrémité inférieure formant une base ouverte, de sorte que le corps 2 délimite un canal C2 qui débouche par une extrémité supérieure du corps 2 qui est une extrémité d'évacuation obturée par une membrane 5. Ici les termes « inférieure » et « supérieure » ne préjugent pas de la disposition finale montée du dispositif de ventilation mais facilitent l'exposé fait en référence à certaines des figures. Le canal C2 s'étend longitudinalement entre l'extrémité de base et l'extrémité d'évacuation, typiquement autour d'un axe central X du corps 2 qui est un axe pouvant traverser/passer par l'ouverture O à l'état monté du dispositif 1 de ventilation, comme illustré par exemple sur la figure 5. La paroi latérale 20 peut être une paroi latérale extérieure du corps 2 qui inclut optionnellement un conduit ou élément de conduite 200, comme visible sur la figure 2A.

Un bord annulaire 20' de la paroi annulaire 20 peut inclure une gorge inférieure G2 (figure 1) permettant de loger le joint J ou élément d'étanchéité, par exemple sous forme d'anneau, de façon radialement espacée de l'élément de conduite 200 entourant la voie ou canal C2 pour la circulation de gaz.

Plus généralement, la paroi latérale 20 peut porter un joint J en l'écartant de l'élément de conduite 200. Le joint J peut ainsi être espacé/éloigné d'une zone d'évacuation de gaz très chauds dans des situations de surchauffe ou d'emballement thermique.

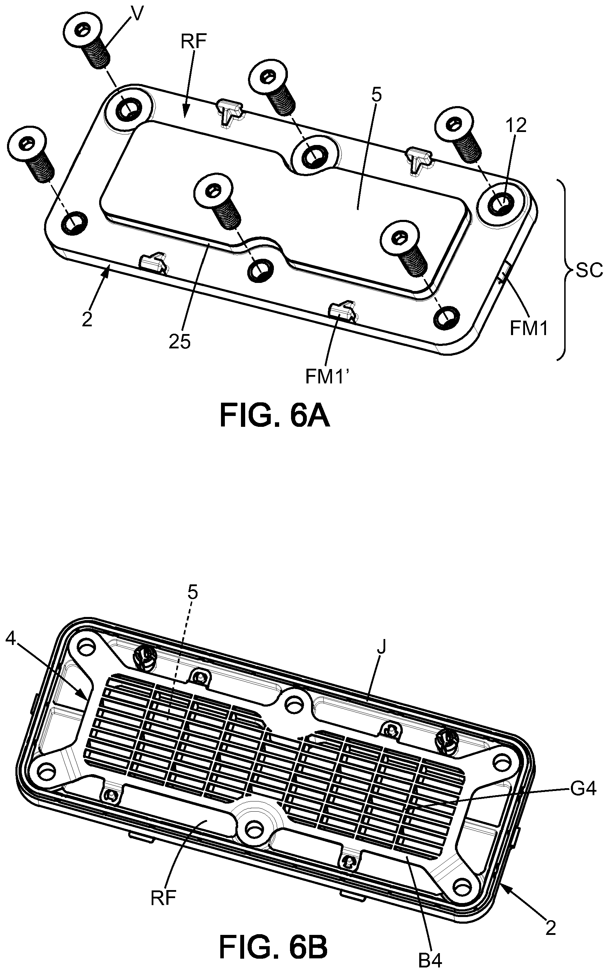

L'élément de conduite 200 est décalé intérieurement par rapport à la région de fixation RF pour l'attache du couvercle 3 et pour la fixation étanche au boîtier P. L'élément de conduite 200 peut éventuellement servir à la fixation de la membrane 5, laquelle fait partie d'un ensemble préassemblé tel que montré par exemple sur la figure 6A. Cet ensemble peut se composer du support de connexion SC et de la membrane 5, avec optionnellement une plaque de protection 4 intégrée dans cet ensemble préassemblé. Une portion annulaire 5c de la membrane 5 peut être fixée de façon étanche à une extrémité de l'élément de conduite 200. Bien entendu, la fixation de la membrane 5, au niveau d'une portion annulaire 5c peut aussi s'effectuer sur une autre surface du corps ou par pincement réalisé dans l'ensemble préassemblé, dans des variantes de réalisation.

Sur les figures 1, 2 et 4, on peut voir que le corps 2 peut une portion radiale annulaire qui inclut ou forme le fond de la gorge G2 orientée vers le boîtier P en permettant de recevoir le joint J annulaire. Le joint J peut éventuellement présenter (avant compression axiale obtenue par l'ancrage/fixation) une hauteur typiquement plus grande que la profondeur de la gorge G2 ou tout du moins est dimensionné pour dépasser/déborder axialement à l'extérieur de cette gorge G2. Plus généralement, le joint J peut faire saillie vers le bas (ici vers le boîtier) en présentant ainsi une surface qui s'étend hors de la gorge G2 et apte à s'appuyer axialement contre le boîtier de batterie. Les faces annulaires de délimitation de la gorge G peuvent présenter, chacune, des nervures ou reliefs saillants de retenue du joint J annulaire. Ces reliefs ou nervures, distribuées de façon espacée suivant la direction circonférentielle, font saillie radialement vers l'intérieur de la gorge G2.

Le corps 2 peut présenter une projection 25 en saillie axialement depuis la portion radiale annulaire qui permet de former la région de fixation RF. Comme montré notamment aux figure 4 et 6A, cette projection 25 (tubulaire, rectangulaire ou cylindrique) peut prolonger axialement la base du corps 2 de façon que l'élément de conduite 200 s'étende depuis la base jusqu'à un bord formé par la projection 25. Ainsi, une face interne de l'élément de conduite 200 peut être formée avec une extension axiale supérieure à l'extension axiale de la base ou s'étend la région de fixation RF annulaire. Plus généralement, le dispositif 1 forme typiquement au moins un canal C2, de préférence délimité par une circonférence de l'élément de conduite 200 qui peut faire saillie d'un côté d'évacuation par rapport au reste du corps 2. Le canal C2 peut servir aussi bien à une amenée d'air qu'à une évacuation d'air, lorsque l'extrémité d'évacuation du corps 2 est obturé par une membrane 5 perméable.

Dans certaines variantes, par exemple utilisant au moins un clapet anti-retour, il peut être prévu que le canal C2 serve uniquement à l'évacuation d'air.

Le canal C2 du corps peut se présenter sous différentes formes avec, dans certains cas, la possibilité de former différentes voies d'évacuation en aval de l'ouverture O. Dans les cas illustrés, le canal C2 est délimité par l'élément de conduite 200 et/ou une partie du corps 2, afin de guider un écoulement gazeux FG s'échappant du boîtier P par l'ouverture O (l'écoulement sortant par l'ouverture passant en totalité par le canal C2). Dans le cas non limitatif de la figure 4, il est montré un canal C2 subdivisé en sous-canaux SC2 en raison de la présence d'entretoises ou cloisons 22 séparatrices qui peuvent quadriller le canal et permettre de distribuer le flux/écoulement gazeux FG.

La configuration avec des entretoises ou traverses/cloisons, réparties à plusieurs niveaux ou allongées suivant la direction de l'axe central X, peut limiter la propagation et l'ampleur de flammes qui pourraient se former avec l'évacuation subite de particules combustibles près de l'ouverture O du boîtier (où de l'oxygène est présent en abondance), en cas de surpression avec emballement thermique dans le boîtier P.

### Intégration, sous-jacente au corps, d'une plaque ajourée de protection

Comme visible sur la figure 1, une grille ou plaque de protection 4, par exemple en matériau métallique, peut être interposée entre le boîtier P et le corps 2 prévu en plastique ou matériau moulé similaire. La grille ou plaque de protection est par exemple formée d'une seule pièce, avec une forme plane/aplatie (donc plus mince que le corps 2). La plaque de protection 4, ajourée, a un effet limiteur de flammes, en limitant la propagation de particules combustibles et de flammes. Une zone ajourée ou partie de grille G4, pouvant former une zone d'impact de particules combustibles dans le dispositif de ventilation 1, est mise en correspondance avec l'entrée du canal C2, tandis qu'une bordure périphérique de la plaque de protection 4 est surmontée par la région de fixation RF prévue dans une bride annulaire du corps 2, qui s'étend autour de l'élément de conduite 200. La bordure B4 de la partie de grille G4 peut suivre le bord de l'entrée du canal C2, en recouvrant axialement ce bord (donc en couvrant la totalité du périmètre de l'entrée du canal C2). La bordure B4 peut être une bordure continue, de forme rectangulaire ou annuaire par exemple.

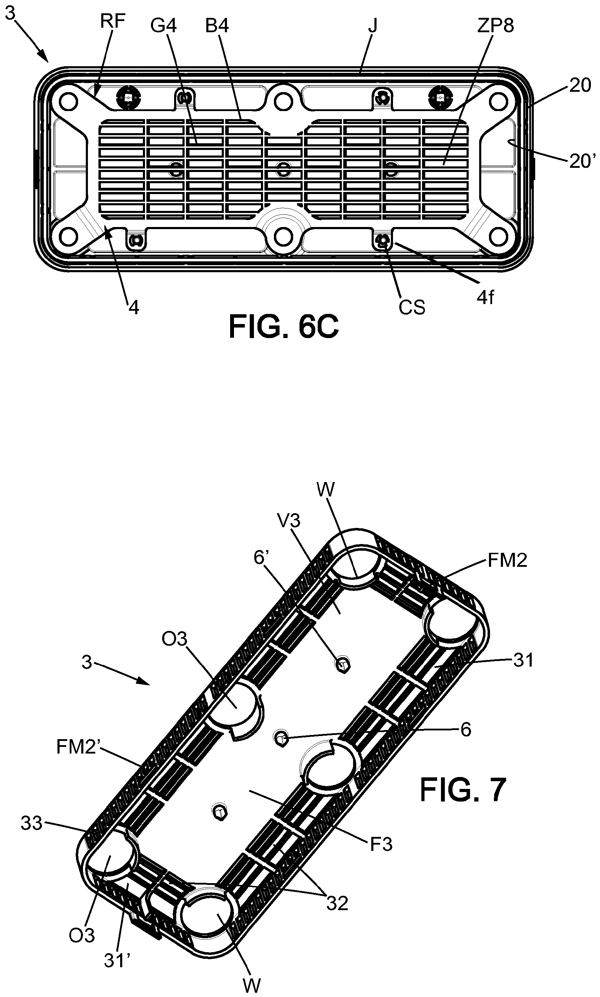

Des pattes ou organes de fixation 4f (visibles en figure 1 ou 6C) sont par exemple formés dans la bordure périphérique de la plaque de protection P4, afin de maintenir celle-ci accolée contre l'extrémité de base du corps 2, en coopérant avec des organes de fixation complémentaires prévus dans la région de fixation RF, par exemple sous forme de clips CS en saillie axialement depuis une face de dessous du corps en regard du boîtier P à l'état monté. Plus largement, on comprend que la plaque de protection 4 peut être une pièce qui est fixée au corps 2, en recouvrant directement le canal C2 du côté opposé à la membrane 5.

Comme décrit plus loin, la protection conférée par la plaque de protection 4 et/ou par le cloisonnement du canal C2 peut être complétée par un effet de bouclier thermique dans une zone de protection ZP8 non ajourée pour le passage de gaz (ou tout du moins, dans certaines options, sans présenter d'ouverture plus large qu'une taille de pore submillimétrique). Lorsque la plaque de protection P4 est présente et après éclatement de la membrane 5, la zone de protection ZP8 constitue une deuxième zone d'impact, différente de la première zone d'impact en ce qu'elle est non ajourée par des passages d'évacuation. Ces deux zones d'impact sont formées rigidement et/ou renforcées pour conserver une configuration plane, typiquement perpendiculaire à l'axe central X.

La zone de protection ZP8 peut être définie par la face plane F8 de l'écran 8, 108 qui est une face (face intérieure du couvercle) orientée vers la membrane 5.

Des pattes de fixation 4p ou autres parties de montage, inclues dans la plaque de protection 4, peuvent être alignées avec les moyens de fixation PF2. Lorsque des vis V ou organes d'ancrage similaires sont prévu(e)s pour traverser cette plaque 4 et une bride ou région de fixation RF annulaire du corps 2, on peut optionnellement utiliser, dans des orifices/conduits de montage pouvant constituer les moyens de fixation PF2, des anneaux fendus ou organes métalliques qui constituent des limiteurs de compression 12, afin de former une interface de contact avec les surfaces plastiques constituées par exemple par le boîtier P et le corps 2.

Le dispositif de ventilation 1, assemblé comporte le couvercle 3 est muni de son joint J, afin d'obturer l'ouverture O en s'assurant que les échanges gazeux soient réalisés avec une filtration par la membrane 5 ou par un nombre adapté de membranes. Dans l'exemple non limitatif des figures 1 et 5, on comprend que le joint J peut s'appuyer sur une zone annulaire de siège prévue sur le boîtier, autour de l'ouverture O, typiquement sans pénétrer intérieurement dans le boîtier. Ce joint J peut être un joint annulaire, par exemple en matériau élastomère, venant axialement en contact avec le boîtier P, sur une face externe de ce dernier.

### Fixation du couvercle sur le corps pour maintenir la zone de protection

Le corps 2, qui peut être en matériau plastique rigide, inclut une région de fixation RF qui permet d'attacher et maintenir la partie de capot 9 du couvercle 3 solidaire du corps. Des clips ou premiers moyens de fixation FM1, MF1' sont par exemple répartis/distribués sur la périphérie du corps 2, typiquement radialement à distance - avec un écartement radial vers l'extérieur - de l'élément de conduite 200. Les figures 1, 2 et 6A illustrent le cas non limitatif de clips à face biseautée et à effet anti-retrait du couvercle 3. La fixation peut s'effectuer par déformation plastique des moyens complémentaires de fixation FM2, FM2' ou FM prévus dans la partie de capot 9 qui peut être réalisée en une pièce de matériau plastique. Des pattes axialement saillantes FM2, FM peuvent former au moins une partie des moyens/organes complémentaires de fixation.

Les moyens complémentaires de fixation FM2, FM2' ou FM, par un effet de rappel élastique dans leur forme initiale, empêchent le retrait du couvercle 3, de sorte que ce dernier reste fixé au corps 2, quelle que soit la montée en température dans le canal C2. Cela qui signifie que, si l'écran 8, 108 n'était pas présent, la partie de capot 9 ne se détacherait pas mais risquerait d'être cassée et fondue près de sa partie d'obturation 30 en obturant des voies d'évacuation, avant que la zone de fixation (plus éloignée du canal C2) ne soit à son tour dégradée/cassée si l'emballement thermique perdure. La configuration prévue ici, avec des voies de passage O3, O3' multiples et le bouclier correspondant à la zone protectrice ZP8, permet de favoriser l'échappement gazeux massif sans réduction de la section de passage pour l'évacuation et en minimisant le risque de déformation/altération à la chaleur, ce qui évite concrètement qu'un état de surpression perdure avec la surchauffe associée.

La partie de capot 9, qui appartient au couvercle 3, peut se monter sur le corps 2 (en se fixant en périphérie du canal C2), par une jupe 33 ou partie latérale similaire décalée par rapport au débouché du canal C2 à l'extrémité d'évacuation du corps 2. Ainsi, les moyens complémentaires de fixation FM2, FM2' peuvent faire partie de la jupe 33 qui inclut en outre des orifices constitutives de voies de passage O3'.

Comme visible notamment sur les figures 1-2, 4 et 7, la partie de capot 9 peut être pourvue d'une pluralité d'ouvertures O3, O3' permettant de former des ouvertures du couvercle 3 qui ne sont pas, suivant la direction de l'axe X, en regard du canal C2. Pour cela, la partie de capot 9 peut être pleine dans une zone centrale en incluant ainsi une portion d'obturation 30, typiquement non ajourée, qui se combine avec l'écran 8, 108 pour faire barrage à un flux axial sortant du canal C2 de sorte qu'aucune particule ne peut sortir en ligne droite, parallèlement à l'axe X, sans éviter un impact sur le couvercle 3. Cet agencement évite la propagation de feu, tout en assurant que la partie de capot 9 est protégée vis-à-vis des gaz très chauds et des flammes (parvenir à une situation de fusion de la partie de capot 8 requiert bien plus de temps, par exemple au moins 5 minutes).

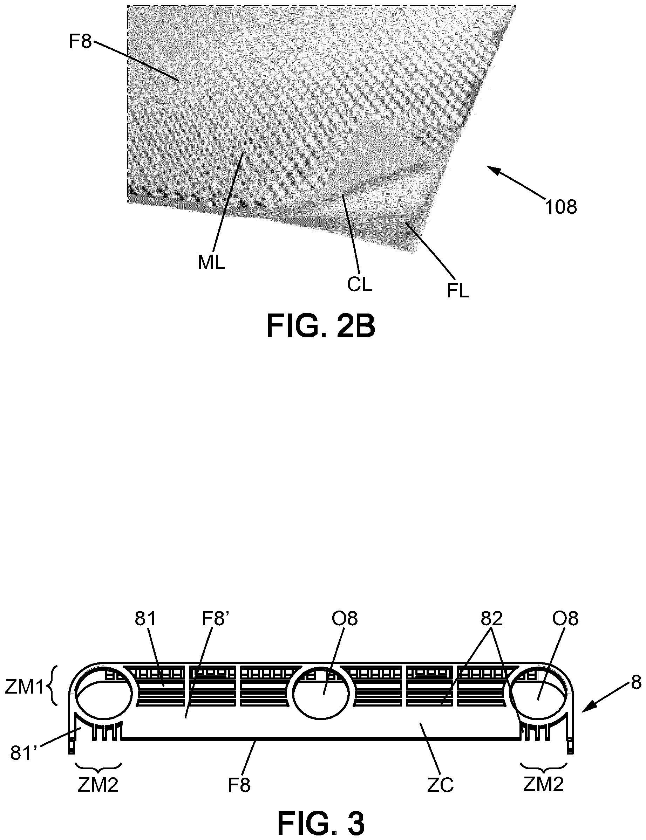

Cependant, comme montré sur les figures 1 et 2, un écran 8, 108 qui forme la zone de protection ZP8, en incluant une couche métallique ML, protège la portion d'obturation 30, par exemple en la recouvrant complètement pour éviter la fusion de matière plastique présente dans la partie de capot 9. Il y a ainsi un chevauchement entre une couche métallique ML qui peut former la face interne du couvercle 3 qui est en vis-à-vis de la membrane 5 et la portion d'obturation 30 qui s'étend parallèlement à la membrane 5 dans une configuration fermée du couvercle. La couche métallique ML subit l'impact des particules combustibles/chaudes en cas d'emballement avec la membrane 5 percée

La membrane 5 peut optionnellement s'étendre au même niveau/à la même distance axiale par rapport à la plaque de protection 4 et/ou au boîtier P, et éventuellement à même distance axiale de la zone protectrice ZP8 (distance par exemple au moins supérieure ou égale à 5 ou 7 mm de cette zone, pour permettre un éventuel gonflement de la membrane 5).

Le couvercle 3 peut être fixe par rapport au corps 2, en l'absence de ressort axial ou quelconque pièce autorisant un degré de liberté en translation ou rotation. Dans les options illustrées, un effet anti-rotation est aussi procuré par l'action des ergots de clips FM1, FM1', typiquement engagés au travers de fenêtres ou évidements de la partie de capot 9 du couvercle 3. Plus généralement, le couvercle 3 peut être en prise sur des reliefs du corps 2, ce qui permet en pratique d'empêcher un retrait accidentel du couvercle 3, par exemple en cas d'à-coup lorsque le boîtier P est embarqué dans un véhicule motorisé.

### Exemple de fonction de perçage intégrée au couvercle

En référence aux figures 1 et 4, il est prévu sur le couvercle 3 un ou plusieurs organes perceurs 6, 6', orienté(s) vers une ou plusieurs zones de la membrane 5 qui sont chacune éloignées de la portion annulaire 5c de fixation. Dans le cas non limitatif de la figure 1, la partie de capot 9 inclut, en regard du canal C2, au moins un premier organe perceur 6 central. De plus, la partie de capot 9 peut intégrer au moins deux organes perceurs 6' décalés suivant la direction d'allongement du couvercle 3, ce dernier pouvant présenter un format généralement rectangulaire ou non circulaire.

Chaque organe perceur 6, 6' est rigide et pourvue d'une pointe ou extrémité adaptée pour déchirer/percer la membrane 5 en vis-vis, qui se gonfle en saillie au-dessus de l'extrémité d'évacuation du corps 2.

Que l'organe perceur 6, 6' soit réalisé sous forme de relief saillant de la partie de capot 9 ou conçu comme une quelconque structure pointue ou coupante structure portée par le couvercle 3, on comprend que cet organe perceur 6, 6' permet de perforer ou éclater la membrane 5 en cas de surpression dans le canal C2, typiquement au-delà d'un seuil de surpression pour lequel un emballement thermique est très probable ou avéré.

Un ou plusieurs organes perceurs peuvent s'étendre parallèlement les uns aux autres, en étant chacun inclus dans une même pièce plastique constituant un composant rigide du couvercle 3.

Dans la partie de capot 9, les voies de passage O3, O3' peuvent être distribuées à la fois autour de l'écran 8, 108 et autour de l'organe perceur 6, 6'. Dans des réalisations, l'écran 8, 108 est adapté, avec un orifice d'insertion 8a ou des orifices d'insertion prédéfinis ou prédécoupés, pour se fixer directement contre la portion d'obturation 30 tout en laissant chaque organe perceur 6, 6' traverser l'écran 8, 108 par une insertion sélective dans un tel orifice d'insertion 8a.

Plus généralement, l'organe perceur 6, 6' peut traverser l'écran 8, 108 ou être disposé entre deux portions adjacentes de l'écran 8, 108, de sorte que l'organe perceur 6, 6' constitue, au sein du couvercle 3, un point qui est proximal de la membrane 5.

Dans des réalisation préférées, l'organe perceur 6, 6' a une extension axiale en ayant une forme étroite de tige par exemple. Il peut s'étendre suivant une direction axiale définie, avec par exemple un axe longitudinal de la tige de cet organe perceur 6, 6' qui passe à l'intérieur d'un périmètre délimité par un bord externe de l'écran 8, 108.

Dans le cas non limitatif de la figure 1, chaque organe perceur 6, 6' peut être distant d'une jupe 33 du couvercle 3 et distant d'éventuels rabats R8 ou parties incurvées/jupe intérieure appartenant à l'écran 8.

### Réalisations non-limitatives de réalisation de l'écran

L'écran 8, 108 peut être rigide, flexible ou partiellement flexible. Dans les cas des figures 1 et 3, l'écran 8 est ou inclut une coque à base d'un matériau métallique. Des zones de marges ZM1, ZM2 sont prévues dans une zone annulaire de transition entre la zone protectrice ZP8 non ajourée et des parties latérales de l'écran 8. La zone protectrice ZP8 est prévue au centre de l'écran 8 pour pouvoir couvrir une surface identique ou supérieure à la surface de sortie du canal C2. La ou les parties latérales de l'écran 8, qui incluent par exemple une jupe ou des rabats R8 pour recouvrir latéralement le corps 2, par extérieur typiquement, disposent de multiples fentes ou ouvertures de sorte que le couvercle 3 peut disposer de voies latérales d'évacuation de gaz, formées par superposition :
- de voies de passage O3' de la partie de capot 9 (ouvertures/fentes dans la jupe 33),
- et des fentes ou ouvertures O8' prévues dans la périphérie latérale de la partie de capot 9.

Avec cette disposition, l'écran 8 à couche métallique ML peut étendre l'effet de protection thermique principal, procuré dans la zone protectrice ZP8 non ajourée radiale, par un effet de protection thermique en marge en chevauchant /recouvrant les barreaux en plastique ou organes plastiques similaires qui forment la périphérie de la portion d'obturation 30.

En référence à la figure 3, deux zones de marge ZM1, ajourées, peuvent être disposées parallèlement dans la portion radiale de la pièce formant l'écran 8. Deux autres zones de marge ZM2, ajourées également, sont aussi prévues perpendiculairement aux zones de marge ZM1, afin de disposer d'ouvertures axiales dans le couvercle 3 dans une région périphérique décalée radialement vers l'extérieur par rapport à la portion de conduit PC de section constante générée depuis l'extrémité d'évacuation/sortie du canal C2 (cette portion de conduit PC étant formée dans un volume intérieur V3 (figure 7) de/sous la partie de capot 9). De telles ouvertures axiales peuvent permettre de ne pas obturer les voies de passage O3, O3' prévues dans la partie de capot 9, avec typiquement une superposition des orifices O8, O8' et ces voies O3, O3' à l'état fixé de l'écran 8 sur la partie de capot 9.

Plus généralement, l'écran 8, qui est par exemple plus mince que la partie de capot 9, peut former un bouclier thermique ajouré seulement autour de la zone protectrice Z8 qui s'accole/recouvre la portion d'obturation 30.

En référence aux figures 2A-2B et 4, il est illustré le cas d'un écran 108 sous forme de feuille souple directement collée à la portion d'obturation 30. Dans ce cas, la jupe 33 et/ou les zones ajourées en périphérie de la partie de capot 9 peuvent ne pas être recouvertes intérieurement par un matériau métallique de la couche ML. L'écartement radial vers l'extérieur de cette périphérie de la partie de capot 9, où une large section cumulée pour l'évacuation de gaz est formée, peut être suffisant pour minimiser le risque de retombée/retour de plastique fondu dans le canal C2. En pratique, la montée en température en périphérie de la partie de capot 9 est moins rapide que dans la partie d'obturation 30 se situant directement dans la trajectoire axiale de sortie de l'écoulement gazeux FG.

La figure 2B illustre partiellement une feuille souple qui compose la partie de l'écran 108 prévu pour recouvrir et se fixer en chevauchement avec la portion d'obturation 30. Outre la couche métallique ML, qui peut être à treillis métallique, pour former la face F8 de revêtement du côté intérieur du couvercle 3, une couche d'isolation thermique CL, par exemple à base d'un matériau céramique, peut être optionnellement prévue entre la couche métallique ML et la partie de capot 9.

L'écran peut comporter une couche adhésive FL ou couche d'attache équivalente, directement collée sur la partie de capot 9. La couche adhésive FL peut être intercalée au moins entre la portion d'obturation 30 et la couche métallique ML.

Lorsqu'un organe perceur 6, 6', rigide, est prévu dans la portion d'obturation 30, la feuille constituant tout ou partie de l'écran 108 peut être localement trouée, avec un orifice d'insertion 8a. Cette disposition est aussi applicable dans une réalisation avec un écran 8 rigide, comme visible dans le cas de la figure 1.

Dans des variantes, un perçage peut être obtenu par une pointe ou organe perceur prévu directement dans la couche métallique ML ou tout du moins dans l'écran 8 (qui dispose d'une telle couche métallique ML).

### Exemple de réalisation de voies de passage en périphérie de la zone protectrice

Le corps 2 peut réaliser un guidage unidirectionnel du flux ou écoulement gazeux FG sortant par l'ouverture O, avec le cas échéant les cloisons 22 qui participent à un effet de guidage linéaire, de sorte que les éventuelles particules incandescentes/combustibles sont entraînées axialement vers le bouclier d'impact formé par l'écran 8, 108, dans la zone protectrice ZP8 qui est alignée axialement par rapport au débouché du canal C2, dans l'extrémité d'évacuation formée par le corps 2. La déviation réalisée par le couvercle 8, 108 peut s'effectuer à 360°, en particulier dans les directions radiales. La présence, dans la partie de capot 9, de voies de passages O3' qui débouchent latéralement vers l'extérieur par la périphérie du couvercle, facilite un échappement suivant cet effet de déviation. De plus, un échappement de bord est aussi permis lorsque la portion de capot 9 inclut des orifices O3 (bien visibles sur la figure 4 ou sur la figure 5) qui débouchent axialement et dans la même direction générale que la direction D2, avec un décalage de position (position excentrée) cependant par rapport au périmètre de la zone protectrice ZP8 qui est paramétré au moins égal au périmètre du débouché du canal C2 à l'extrémité d'évacuation.

En référence à présent à la figure 7, la partie de capot 9 qui peut s'emboîter/fixer sur le corps, afin de recouvrir le canal C2 de façon non étanche, peut présenter différentes tailles pour les voies de passage, avec :
- le larges ouvertures O3 adjacentes à la zone protectrice ZP8 et à une face F3 de fixation de l'écran 8 ou 108,
- des orifices ou fentes de section intermédiaire 31, 31', inférieure à la section des larges ouvertures O3, qui peuvent être prévues dans une zone de marge de la portion radiale de la partie de capot 9, autour de la portion d'obturation 30 non ajourée (et possiblement en s'intercalant entre deux des larges ouvertures O3), afin de faciliter un échappement gazeux axial adjacent à la zone protectrice, et
- des orifices ou fentes 32 de section réduite, qui est une section inférieure à la section intermédiaire, distribuées dans la jupe 33 ou paroi latérale analogue de la partie de capot 9 en matériau plastique.

Des segments saillants, constituant des parois de barrage W (courbées en C par exemple), peuvent faire saillie axialement vers l'intérieur depuis la face intérieure F3 de la partie de capot 9, en bordant une partie des larges ouvertures O3 sur un côté radialement intérieur, comme visible en figure 7. Ces parois de barrage W coupent des trajectoires de fuite de particules provenant du canal C2 et peuvent limiter le risque que des particules incandescentes/combustibles ressortent directement hors du dispositif de ventilation 1, ce qui a un effet protecteur de l'environnement proche du dispositif (effet anti-propagation d'incendie).

Lorsque l'écran 8 est sous forme de couvercle secondaire intérieur ou inclut une pièce rigide avec de larges ouvertures O8, celles-ci sont typiquement en superposition avec les larges ouvertures O3 (ce qui forme des conduits axiaux, décentrés, du couvercle 3), on comprend que les parois de barrage W peuvent être formées uniquement dans l'un parmi l'écran 8 et la partie de capot 9.

Comme illustré sur la figure 3, des ouvertures ou fentes 81, 81' et 82 peuvent être formées avec une correspondance de forme (géométrie) et de taille avec les ouvertures ou fentes correspondantes de la partie de capot 9, ici ouvertures ou fentes respectives 31, 31' et 82. Autrement dit, les orifices ou fentes 82 (plus proche de la zone protectrice ZP8 non ajourée) sont de section réduite, donc plus petites que les orifices ou fentes 81 ou 81'. Ces ouvertures 81, 81', 82 peuvent être chacune de section inférieure à n'importe laquelle des larges ouvertures O8.

Quelle que soit la distribution adoptée dans la partie de capot 9 pour les orifices/fentes, avec un dimensionnement adapté pour obtenir une section cumulée de passage possiblement identique ou similaire à la section du débouché du canal C2, on comprend que le couvercle 3 est rendu résistant à la chaleur au moins dans la région de chevauchement entre la couche métallique ML de l'écran 8, 108 et la portion d'obturation 30. Des réalisations avec une structure tridimensionnelle de l'écran 8, avec une région périphérique d'écran ajourée pour laisser le gaz atteindre les voies de passages O3, O3', peuvent être préférées lorsque le canal C2 et/ou les sous-canaux SC2 présente(nt) une largeur au moins égale à la hauteur du corps 2 avec des probabilités de trajectoire oblique plus importantes pour des particules solides entrainées par l'écoulement.

Le couvercle 3, préassemblé avec l'écran 8, 108 typiquement collé ou soudé pour être maintenu dans une position de protection, parallèle à et fixé de façon permanente à la partie de capot 9, intègre donc une couche métallique qui peut se situer par exemple à moins de 15 ou 20 mm du canal C2. Dans un mode de ventilation normale, ce couvercle 3 protège efficacement la membrane 5, toutes les voies de passage pour le gaz étant par exemple décalées radialement sur la périphérie du couvercle 3, c'est-à-dire au niveau de sa jupe externe 33 et éventuellement en position adjacente à la jonction de cette jupe externe 33. Ainsi, comme pour le cas de l'écoulement gazeux FG sortant, le flux gazeux entrant dans le dispositif de ventilation 1 ne peut pas être conservé unidirectionnel pour atteindre le canal C2 via la membrane 5.

Plus largement, dans des exemples préférés, deux changements de direction au moins sont nécessaires pour passer du canal C2 à l'extérieur du dispositif et vice versa.

La partie de capot 9 peut être de conception simple, par exemple par moulage en une seule pièce en matière plastique. Le couvercle 3 est par exemple dépourvu de support ou relief de retenue d'un joint quelconque. Ici, la partie de capot 9 présente une portion d'obturation 30 principale (portion radiale ici) pouvant correspondre à une partie de fond, depuis laquelle s'étend une paroi latérale, tubulaire, formant la jupe externe 33 du couvercle 3.

### Exemple d'assemblage

Le corps 2 peut supporter directement la totalité des autres éléments du dispositif 1, à savoir le joint J, la plaque de protection 4 qui peut emboîtée élastiquement sous le corps contre sa base, la membrane 5 pouvant être soudée ou rapportée avec un contact annulaire étanche, la partie de protection ajourée, typiquement sous forme de couvercle 3, en entourant l'ouverture O de la paroi du boîtier P de batterie.

Les vis V ou organes d'attache permettent au corps 2 de se monter dans ou autour l'ouverture O, contre le boîtier P, en délimitant le canal C2, formé à l'aplomb de l'ouverture O ou plus généralement en suivant la direction longitudinale du corps 2 (suivant l'axe central). A l'état monté, le couvercle 3 est maintenu espacé de la paroi P par la base du corps 2.

Avant ce montage sur le boîtier P (montage final), il peut être réalisé un assemblage du dispositif 1, qui constitue une unité de ventilation préassemblée. Cet assemblage peut inclure, et éventuellement commencer par, l'étape de soudage de la membrane 5 qui est optionnellement réalisée à chaud, typiquement par utilisation d'une énergie vibratoire de façon à faire fondre un relief provisoire prévu sur l'élément de conduite 200. La zone de chevauchement avec chaque zone de marge/portion annulaire 5c de membrane peut être convertie en zone de fusion, avec l'obtention d'une partie annulaire soudée.

Optionnellement, l'utilisation d'une sonotrode plate peut être préférée. Celle-ci peut être disposée et déplacée, circulairement ici, sur la région annulaire de recouvrement/chevauchement entre le bord annulaire de la membrane 5 et le dessus de l'élément de conduite 200. La sonotrode fait fondre au moins ce dessus/partie de contact et « colle » la membrane 5, en la plaquant (avec une force axiale de contact) sur le matériau chauffée/ramolli du corps 2.

Comme bien visible sur les figues 1 et 6A, un épaulement peut être prévu dans le corps 2, au niveau de la région de fixation RF pour permettre de réaliser des clips à la fois sur la base (moyens de fixation FM1') et en périphérie de la base du corps 2 (avec les moyens de fixation FM1 chacun en saille latéralement sur un côté du corps 2). Ceci permet de fixer le couvercle 3 dans une zone radialement décalée vers l'extérieur, par rapport à la zone de soudure de la membrane 5. Plus généralement, chaque membrane 5 peut être fixée sur seulement une même face axiale du corps 2, en obturant un canal C2 prévu dans ce corps 2.

Lorsqu'une feuille flexible est prévue pour constituer la couche métallique ou l'une des couches métalliques de l'écran, celle-ci est préalablement fixée sur la partie de capot 9 en ayant une épaisseur inférieure à 4 ou 6 mm et/ou très inférieure à une distance axiale d'écartement entre le débouché du canal C2 et la portion radiale prévue dans la partie de capot en plastique 9.

Le dispositif de ventilation 1 peut former un agencement compact, réactif à une situation d'urgence dans le boîtier P, ce qui peut avantageusement éviter des dégradations néfastes, éviter la propagation de feu, tout en assurant que la partie de capot 9 est protégée vis-à-vis des gaz très chauds et des flammes. Ainsi, la durée nécessaire pour faire fondre la partie de capot 9 est bien plus importante, de sorte qu'un retour à l'équilibre avec refroidissement peut être obtenu sans dégradation extérieure au boîtier et cela avant que du plastique de couvercle ne coule pour boucher le canal C2.

La présente divulgation ne se limite pas aux modes de réalisation décrits ci-avant, seulement à titre d'exemple, mais elle englobe toutes les variantes que pourra envisager l'homme de l'art dans le cadre de la protection recherchée.

Par exemple, il peut être prévu différentes façons de libérer le canal C2 pour permettre la circulation d'un débit gazeux plus élevé. La membrane 5 peut ainsi, dans des variantes, présenter une structure escamotable ou présenter au moins une région fragile facilitant sa rupture, par exemple sans recours à une pointe de perforation pourvu que le niveau de déformation requis pour une telle rupture soit atteint seulement en cas de dépassement d'un seuil de surpression (du côté du canal/intérieur du boitier de batterie).

Par ailleurs, l'expression boîtier de batterie doit être comprise dans un sens général, le boîtier pouvant renfermer un ou plusieurs groupes d'accumulateurs aptes à fournir une énergie sous forme électrique ou énergie exploitable sous une quelconque forme pour une conversion en énergie électrique.

La paroi du boîtier P incluant l'ouverture O peut présenter n'importe quelle orientation. Bien que l'exemple non limitatif de la figure 5 correspond à une orientation de cette plaque/paroi dans un plan généralement horizontal pour disposer d'un couvercle 3 ou partie de protection surmontant axialement (par le dessus) le corps 2 permettant la connexion du couvercle 3, de sorte que l'axe X est ici vertical, d'autres dispositions sont permises, notamment avec une unité de ventilation montée latéralement sur le boîtier de batterie.

## Revendications

1. Dispositif (1) de ventilation pour boîtier de batterie, en particulier pour boîtier comprenant une ou plusieurs batteries, le dispositif (1) comprenant :
- un corps (2) pourvu d'une paroi latérale et se raccordant sur une ouverture (O) du boîtier ;
- un canal (C2), délimité par un élément de conduite (200) et/ou une partie dudit corps (2), pour guider un écoulement gazeux (FG) s'échappant du boîtier par l'ouverture (O) ;
- une membrane (5) perméable aux gaz, portée par le corps (2) en obturant le canal (C2), la membrane (5) constituant une partie de filtration apte à retenir des poussières et/ou de l'eau, la membrane étant flexible et à partie fragile pour ne plus obturer le canal (C2) dans un état perforé ou éclaté de la membrane (5) obtenu en cas de surpression dans le canal (C2) au-delà d'un seuil de surpression ; et
- un couvercle (3), comprenant une partie de capot (9) plastique solidarisée à un support (SC) de connexion périphérique prévu dans le corps (2), en recouvrant la membrane (5) ;
**caractérisé en ce que** le dispositif (1) de ventilation comprend un écran (8 ; 108) à couche métallique (ML), l'écran (8 ; 108) étant distinct de la membrane (5) et inclus dans ou solidaire du couvercle (3) en formant, dans une zone protectrice (ZP8) prévue dans l'écran (8 ; 108), un bouclier thermique interposé entre le canal (C2) et une portion d'obturation (30) du couvercle (3) qui est en en regard du canal (C2),
**et en ce que** des voies de passage (O3, O3') sont prévues :
- dans le couvercle (3), dans la partie de capot (9) et en décalage par rapport à la zone protectrice (ZP8), de sorte que le couvercle (3) est ajouré ;
- et/ou latéralement entre le couvercle (3) et le corps (2) ;
et permettent, lorsque la membrane (5) est perforée ou éclatée, un échappement de gaz provenant du canal (C2) qui est un échappement d'urgence sans passer par la portion d'obturation (30), pour traverser le couvercle (3) et/ou contourner la portion d'obturation (30) du couvercle.

2. Dispositif selon la revendication 1, comprenant en regard du canal (C2) un organe perceur (6, 6') porté par la partie de capot plastique pour perforer ou éclater la membrane (5) en cas de surpression dans le canal (C2) au-delà d'un seuil de surpression, dans lequel les voies de passage (O3, O3') comprennent, dans le couvercle (3), des voies de passage distribuées à la fois autour de l'écran (8 ; 108) et autour de l'organe perceur (6, 6').

3. Dispositif selon la revendication 1 ou 2, dans lequel le couvercle (3) est une partie préassemblée qui intègre l'écran (8 ; 108) avant une fixation de cette partie sur le support (SC) de connexion.

4. Dispositif selon la revendication 2 ou 3, dans lequel l'organe perceur (6, 6') est configuré pour :
- traverser l'écran (8 ; 108) ou être disposé entre deux portions adjacentes de l'écran (8 ; 108) ; et/ou
- s'étendre suivant une direction axiale définie par une tige de l'organe perceur (6, 6'), un axe longitudinal de la tige passant à l'intérieur d'un périmètre délimité par un bord externe de l'écran (8 ; 108).

5. Dispositif selon l'une quelconque des revendications 1 à 4, dans lequel l'écran (8 ; 108) comprend une couche adhésive (FL) directement collée sur la partie de capot (9), la couche adhésive (CA) étant intercalée au moins entre la portion d'obturation (30) et la couche métallique (ML).

6. Dispositif selon l'une quelconque des revendications 1 à 4, dans lequel l'écran (8 ; 108), séparé et espacé du corps (2), est porté par la partie de capot en formant une face (F8) intérieure du couvercle (3) et présente deux faces parallèles opposées dont :
- l'une est constituée par la couche métallique (ML) ; et
- l'autre forme une couche de contact pour le contact avec un matériau plastique constitutif d'une pièce rigide structurelle du couvercle (3), l'écran (8 ; 108) étant rendu solidaire du couvercle (3) par des moyens de fixation et/ou de collage.

7. Dispositif selon la revendication 2, seule ou combinée à l'une quelconque des revendications 3 à 6, dans lequel l'écran (8 ; 108) comprend une portion sensiblement plane parallèle à un plan de l'ouverture (O),
et dans lequel l'écran (8 ; 108) est traversé par une tige de l'organe perceur (6, 6') dans la portion sensiblement plane.

8. Dispositif selon l'une quelconque des revendications précédentes, dans lequel la couche métallique (ML) de l'écran (108) est réalisée sous forme d'une partie de film ou feuille formant une face (F8) de l'écran qui définit une surface directement en vis-à-vis de la membrane (5).

9. Dispositif selon l'une quelconque des revendications précédentes, dans lequel l'écran (8 ; 108) comporte au moins une couche d'un matériau fibreux thermiquement isolant.

10. Dispositif selon l'une quelconque des revendications précédentes, dans lequel l'écran (8 ; 108) présente une ou plusieurs parties pliées ou incurvées pour recouvrir chacune une portion de marge du couvercle qui fait partie de ou qui est adjacente à la portion d'obturation (30).

11. Dispositif selon l'une quelconque des revendications précédentes, dans lequel la membrane (5) s'étend entre un élément métallique ajouré (10) qui recouvre l'ouverture du boîtier et l'écran, le corps étant de préférence pourvu de cloisons, disposées dans le canal (C2) et permettant de maintenir une configuration plane de la membrane (5) en cas de dépression dans le canal (C2).

12. Procédé d'assemblage d'un dispositif (1) de ventilation pour boîtier de batterie, en utilisant un écran (8 ; 108) apte à se monter sous une portion d'obturation (30) d'un couvercle avant une connexion du couvercle (3) sur un corps (2) équipant le boîtier de batterie en délimitant un canal (C2) formant une sortie au travers d'une ouverture (O) dudit boîtier, le procédé comprenant les étapes suivantes :
- disposer une membrane (5) transversalement par rapport à un support annulaire ou paroi latérale du corps (2), la membrane (5) étant perméable aux gaz pour permettre une filtration sélective d'un flux gazeux circulant dans le canal (C2) pour quitter le boîtier de batterie;
- fournir le couvercle (3) dans un état préassemblé, avec l'écran (8 ; 108) inclus dans ou solidaire du couvercle (3), l'écran (8 ; 108) comportant une couche métallique (ML) et formant un bouclier thermique recouvrant par le dessous la portion d'obturation (30) du couvercle (3), la portion d'obturation (30) appartenant à une partie de capot (9) en matériau plastique ;
- fixer rigidement le couvercle sur le corps (2), de sorte que l'écran (8 ; 108) recouvre le canal (C2) et la membrane (5), qui est une membrane flexible et à partie fragile pour ne plus obturer le canal (C2) dans un état perforé ou éclaté de la membrane (5) obtenu en cas de surpression dans le canal (C2) au-delà d'un seuil de surpression ;
dans lequel des voies de passage (O3, O3') sont prévues dans le couvercle (3) ou en périphérie de la portion d'obturation (30), de préférence dans la partie de capot (9),
ce grâce à quoi, dans le dispositif (1) de ventilation, un échappement d'urgence de gaz au travers du couvercle et/ou en contournant la portion d'obturation est permis par les voies de passage (O3, O3') qui sont distribuées autour d'une zone protectrice (ZP8) constituée par l'écran (8).

13. Procédé d'assemblage selon la revendication 12, dans lequel l'écran (108) est fourni sous forme d'une feuille flexible qui est fixée de manière permanente à une face interne de la partie de capot (9) qui est disposée en regard du canal (C2), de préférence par collage ou soudure, ce grâce à quoi l'écran est rigidifié et accolé à la portion d'obturation (30), l'écran (108) étant dépourvu d'ouvertures ou fentes, au moins une partie des voies de passage (O3, O3') étant sélectivement décalées dans une région du couvercle (3) périphérique par rapport à l'écran (108).

14. Procédé d'assemblage selon la revendication 12, dans lequel l'écran (8 ;
108) est fourni sous forme d'une feuille flexible qui est fixée de manière permanente à une face interne de la partie de capot (9) qui est disposée en regard du canal (C2), de préférence par collage ou soudure, ce grâce à quoi l'écran est rigidifié et accolé à la portion d'obturation, l'écran (108) étant pourvu d'ouvertures ou fentes, des orifices de la partie de capot (9) qui font partie des voies de passage (O3, O3') étant en alignement ou chevauchement avec les ouvertures ou fentes (O8, O8') de l'écran (108).
